# EUROPÄISCHE PATENTSCHRIFT

(11) **EP 2 879 858 B1**
(45) Veröffentlichungstag und Bekanntmachung des Hinweises auf die Patenterteilung: **03.01.2018**
(21) Anmeldenummer: 13765327.5
(22) Anmeldetag: 12.09.2013
(51) Int. Cl.: B29C 67/00

(54) **VERFAHREN UND VORRICHTUNG ZUM PULVERBETT-BASIERTEN ADDITIVEN HERSTELLEN EINES BAUTEILS**
METHOD AND DEVICE FOR POWDER BED-BASED ADDITIVE PRODUCTION OF A COMPONENT
PROCÉDÉ ET DISPOSITIF DE FABRICATION ADDITIVE SUR LIT DE POUDRE D'UNE PIÈCE

(30) Priorität: 19.09.2012 DE 102012216793
(43) Veröffentlichungstag der Anmeldung: 10.06.2015
(73) Patentinhaber: Siemens Aktiengesellschaft, 80333 München (DE)
(72) Erfinder: REHME, Olaf, 20148 Hamburg (DE)
(86) Internationale Anmeldenummer: PCT/EP2013/068875
(87) Internationale Veröffentlichungsnummer: WO 2014/044589

(56) Entgegenhaltungen:
- EP-A1- 2 399 695
- WO-A1-2011/011818

## Beschreibung

Die Erfindung betrifft ein Verfahren zum pulverbett-basierten additiven Herstellen eines Bauteils, bei dem auf der Oberfläche einer Bauplattform das Bauteil lagenweise erzeugt wird. Dabei wird wiederholt auf der Bauplattform eine Lage des Pulverbettes erzeugt und die herzustellende Lage des Bauteils durch Aufschmelzen des Pulvers erzeugt. Mit anderen Worten wird die herzustellende Lage des Bauteils dadurch erzeugt, dass das Pulverbett im Bereich des herzustellenden Bauteils aufgeschmolzen wird, wobei sich die Lage des Pulverbettes durch Aufschmelzen des Materials in ein Teil des Bauteils verwandelt. Dabei wird die Oberfläche des Pulverbettes zumindest in Teilbereichen nicht parallel zur Oberfläche der Bauplattform erzeugt.

Weiterhin betrifft die Erfindung eine Anlage zum pulverbett-basierten additiven Herstellen eines Bauteils. Diese Anlage weist eine Bauplattform und eine Dosiereinrichtung für Pulver auf, wobei mit der Dosiereinrichtung ein Pulverbett mit einer Oberfläche erzeugbar ist, die zumindest in Teilbereichen nicht parallel zur Oberfläche der Bauplattform verläuft.

Ein Verfahren und eine Anlage zur Durchführung des Verfahrens der eingangs angegebenen Art ist beispielsweise in der EP 2 289 462 A1 beschrieben. Hierbei geht es darum, dass mittels des pulverbett-basierten Herstellungsverfahrens kontinuierlich Teile hergestellt werden sollen, ohne dass Rüstzeiten für die Anlage entstehen, wenn diese nach Fertigstellung eines Bauteils für die Herstellung eines neuen Bauteils vorbereitet wird. Dies wird dadurch erreicht, dass die Schichtebenen, die vom Pulverbett aufgetragen werden, schräg zur Oberfläche der Bauplattform liegen. Der Steigungswinkel der schrägen Pulverlagen wird dabei so gewählt, dass die Partikel des Pulvers nicht zur Bauplattform hin abrutschen. Stück für Stück kann das herzustellende Bauteil auf der Bauplattform hergestellt werden, wobei die Lagen des Bauteils entsprechend der Ausrichtung der Lagen des Pulverbettes schräg zur Oberfläche der Bauplattform verlaufen.

Der schräge Verlauf der Lagen des Pulverbettes ist ein Beispiel dafür, dass diese Lagen nicht parallel zur Oberfläche der Bauplattform verlaufen. Nicht parallel bedeutet im Zusammenhang mit dieser Erfindung, dass zumindest zwischen Teilen der Oberfläche der aktuellen Lage des Pulverbettes und Teilen der Oberfläche der Bauplattform ein Winkel mit einem Betrag von > 0° gemessen werden kann.

Die Herstellung von Bauteilen gemäß der EP 2 289 462 A1 erfolgt auf einem Substrat, welches unter der Dosiereinrichtung für das Pulver hindurchgeführt wird. Dabei können die einzelnen Pulverlagen durch die Dosiereinrichtung erzeugt werden. Die lineare Bewegung des Substrates führt zwangsläufig zu einer Vergrößerung des Bauraums der Anlage, damit diese zumindest über einen gewissen Zeitraum kontinuierlich betrieben werden kann.

Gemäß der EP 2 399 695 A1 ist beschrieben, dass Bauteile in einem Pulverbett auch hergestellt werden können, wenn die Bauplattform eine gekrümmte Oberfläche aufweist. Um dennoch Pulverlagen gleichmäßiger Dicke herstellen zu können, ist vorgesehen, dass ein Glättungsschieber für die Oberfläche des Pulverbetts um eine Drehachse herum schwingend aufgehängt ist und auf diese Weise der Kontur der gekrümmten Bauplattform folgen kann. Die Oberfläche des Pulverbetts befindet sich daher parallel zur gekrümmten Basisebene des Bautisches.

Gemäß der WO 2011/011818 A1 ist beschrieben, dass Bauteile auch durch 3D-Druckverfahren hergestellt werden können. Hierbei kommt ein Applikator zum Einsatz, der das Material der Bauteile Lage für Lage auf eine Unterlage druckt, wodurch das Bauteil entsteht. Diese Unterlage kann auch die Innenwand eines Hohlzylinders sein, wobei der Applikator im Inneren des Hohlzylinders angeordnet ist und das Material in Richtung radial nach außen auf die Unterlage druckt.

Die Aufgabe der Erfindung liegt darin, ein Verfahren bzw. eine Vorrichtung zum pulverbett-basierten additiven Herstellen von Bauteilen anzugeben, die einerseits eine kontinuierliche Herstellung der Bauteile ermöglicht und andererseits einen vergleichsweise geringen Bauraum einnimmt.

Diese Aufgabe wird durch das eingangs angegebene Verfahren erfindungsgemäß dadurch gelöst, dass als Bauplattform die Innenwand eines waagerecht liegenden Hohlzylinders verwendet wird. Das Pulverbett wird im Inneren des Hohlzylinders durch eine teilweise Befüllung desselben mit Pulver erzeugt. Die teilweise Befüllung stellt sicher, dass im Innenraum des Hohlzylinders eine Oberfläche des Pulverbettes entsteht, die zur Durchführung des Verfahrens zugänglich ist. Neue Lagen des Pulverbettes werden erfindungsgemäß überdies nach einer Drehung des Hohlzylinders um seine Mittelachse erzeugt. Gemäß der Erfindung wird damit kein ebenes Substrat als Bauplattform verwendet, sondern eines mit einer einfach gekrümmten Fläche, nämlich die Innenwand des Hohlzylinders. Daher muss die Bauplattform zur Erzeugung eines Bauteils nicht abgesenkt werden und zur Erzeugung eines weiteren Bauteils nach Erzeugung des ersten Bauteils nicht linear in der Ebene der Bauplattform verschoben werden. Vielmehr kann durch eine Drehung des Hohlzylinders sowohl eine Absenkung des Bauteils zwecks Erstellung einer neuen Lage des Pulverbettes als auch zwecks Bereitstellung eines neuen Teils der Bauplattform zur Herstellung eines weiteren Bauteils erfolgen. Dabei nimmt der Hohlzylinder vorteilhaft immer denselben Bauraum ein, ohne dass dieser relativ zum Rest der Anlage linear verschoben werden muss. Dies bewirkt vorteilhaft, dass bei maximaler Ausdehnung der Bauplattform ein minimaler Bauraum für den Hohlzylinder vorgesehen werden muss.

Außerdem ermöglicht der Hohlzylinder vorteilhaft eine kontinuierliche Herstellung von Bauteilen, und zwar endlos. Die Bauteile werden im unteren, d. h. geodätisch am tiefsten liegenden Bereich hergestellt, da sich in diesem aufgrund der Schwerkraft das Pulver befindet. Durch Drehung des Hohlzylinders versinkt die mit als Bauplattform zur Anwendung kommenden Innenwand des Hohlzylinders im Pulverbett, bis es am tiefsten Punkt des Innenraums des Hohlzylinders angekommen ist. In dieser Phase kann durch Nachdosieren von Pulver immer eine neue Lage auf dem in Herstellung befindlichen Bauteil an Pulver aufgetragen werden und beispielsweise durch einen Laser aufgeschmolzen werden. Vorteilhaft bleibt das Volumen des Pulverbettes dabei gleich groß, so dass nur das durch Verfestigung verbrauchte Pulver nachdosiert werden muss.

Ist das Bauteil fertig gestellt, so kann mit dem nächsten Bauteil begonnen werden, da durch die schrittweise Drehung zwischen den Belichtungsvorgängen des Pulvers inzwischen wieder freie Flächenanteile der Innenwand zur Verfügung stehen, die sozusagen gerade im Pulverbett versinken. Währenddessen taucht das fertig gestellte Bauteil durch weitere Drehung des Zylinders aus dem Pulverbett auf, bis es das Pulverbett nicht mehr berührt. Die fertig gestellten Bauteile können gemäß einer besonderen Ausgestaltung der Erfindung von der Bauplattform getrennt werden, wobei dies beispielsweise durch Drahterodieren erfolgen kann.

Der Winkelversatz durch Drehung des Zylinders muss so klein gewählt werden, dass im Bereich der Bauplattform (also am Außenradius des Innenraums des Hohlzylinders) die aufzutragende Menge an Pulver nach der Drehung die maximal zulässige Schichtdicke einer Lage nicht überschreitet. Zu kleineren Radien des Innenraums hin wird die aufgetragene Schichtdicke geringer. Dies muss bei der Bestrahlung der Lage zwecks Herstellung des in Entstehung befindlichen Bauteils berücksichtigt werden. In Bereichen dünnerer Schichtdicke muss der Energieeintrag durch den Laser oder ähnliche Strahlungsquellen geeignet vermindert werden.

Die Bauteilgröße ist damit von der maximal möglichen Befüllung des Hohlzylinders abhängig. Bei einer ebenen Oberfläche des Pulverbettes wird das Pulverbett im Querschnitt betrachtet durch einen Kreisabschnitt gebildet. Dessen größte Tiefe und damit größtmögliche Höhe des zu erzeugenden Bauteils liegt am tiefsten Punkt des Innenraums des Hohlzylinders.

Es ist aber auch möglich, dass durch eine geeignete Dosiervorrichtung, die eine Lippe zum Abstreifen von Pulverpartikeln aufweist, eine gekrümmte Oberfläche des Pulverbettes hergestellt wird. Diese ist vorteilhaft konkav zur Innenwand des Hohlzylinders gekrümmt, so dass der Querschnitt des Pulverbettes sichelförmig wird. Hierdurch wird es möglich, bereits in den Randbereichen des Pulverbettes größere Bauteilhöhen zu erzielen. Außerdem ist es vorteilhaft möglich, bei einem gekrümmten Profil der Oberfläche der neuen Schichtlage eine gleichmäßigere Schichtdicke der Schichtlage zu erzeugen. Hierdurch können auch in Bereichen des herzustellenden Bauteils, die bei geringeren Radien des Innenraums hergestellt werden sollen, größere Schichtdicken erzielt werden. Damit lässt sich das Verfahren vorteilhaft mit einer größeren Effizienz durchführen.

Besonders vorteihaft ist es auch, wenn fertig gestellte Bauteile von der Bauplattform getrennt werden, nachdem diese durch Drehung des Hohlzylinders sich in dessen oberen Hälfte befinden. Hier ist vorteilhaft bereits ein gewisser Abstand zur Oberfläche des Pulverbettes entstanden, so dass vorteilhaft verhindert werden kann, dass diese in das Pulverbett fallen. Vorher werden diese entsprechend gesichert und aus dem Innenraum des Hohlzylinders entfernt.

Gemäß einer weiteren Ausgestaltung der Erfindung ist vorgesehen, dass die Bauplattform nach dem Abtrennen der Bauteile von fertigungsbedingten Bauteilresten befreit wird. Hierzu kann vorteilhaft beispielsweise ein Fräskopf verwendet werden. Durch die Entfernung der Bauteilreste wird vorteilhaft sichergestellt, dass die Bauplattform wieder eine definierte Oberfläche aufweist, die als Basis für ein neues Bauteil dienen kann.

Die genannte Aufgabe wird weiterhin durch die eingangs angegebene Anlage erfindungsgemäß dadurch gelöst, dass die Bauplattform aus der Innenwand eines waagerecht liegenden, um seine Mittelachse drehbar gelagerten Hohlzylinders gebildet ist, wobei der Hohlzylinder zur Aufnahme des Pulverbettes vorgesehen ist, indem die Dosiereinrichtung im Innenraum des Hohlzylinders angeordnet ist. Diese Anlage eignet sich zur Durchführung des oben angegebenen Verfahrens, wodurch die bereits erwähnten Vorteile erreicht werden.

Gemäß einer vorteilhaften Ausgestaltung der erfindungsgemäßen Anlage ist vorgesehen, dass die Dosiereinrichtung eine langgestreckte Dosieröffnung aufweist, die parallel zur Mittelachse des Hohlzylinders verläuft. Mit einer solchen Dosiereinrichtung lässt sich vorteilhaft über die gesamte Länge des Innenraums des Hohlzylinders mit hoher Genauigkeit Pulver dosieren, so dass ein vergleichsweise großes Pulverbett entsteht. Die Dosiereinrichtung weist weiterhin einen Pulvervorrat auf, der die Dosieröffnung speist. Außerdem kann die Dosieröffnung auch verwendet werden, um eine definierte Oberfläche des Pulverbettes nach erfolgter Dosierung herzustellen. Zu diesem Zweck wird die Dosieröffnung oder eine an der Dosieröffnung angebrachte Lippe über die Oberfläche des Pulverbettes gezogen. Überschüssiges Pulver wird damit abtransportiert, so dass das Pulverbett vorteilhaft eine definierte Oberfläche aufweist. Dies ist Voraussetzung für eine hohe Maßhaltigkeit der hergestellten Teile.

Gemäß einer anderen Ausgestaltung der Erfindung ist vorgesehen, dass außerhalb des für das Pulverbett vorgesehenen Volumens im Innenraum des Hohlzylinders eine Trennvorrichtung für die fertig gestellten Bauteile vorgesehen ist. Diese sollte eine Trennung der Bauteile nahe der Bauplattform, also der Innenwand des Hohlzylinders, gewährleisten. Dies ist beispielsweise durch die Spannung eines Drahtes möglich, mit dem ein Drahterodieren durchgeführt werden kann. Die Trennvorrichtung muss außerhalb des Pulverbettes angeordnet sein, damit die Teile nach Fertigstellung zunächst aus dem Pulverbett austauchen können. Das für das Drahterodieren erforderliche Dielektrikum wird durch das Schutzgas im Innenraum gebildet, welches auch eine Oxidation der additiv hergestellten Teile verhindert.

Gemäß einer besondere Ausgestaltung der Erfindung ist vorgesehen, dass unterhalb der Trennvorrichtung im Innenraum des Hohlzylinders eine Auffangeinrichtung für die abgetrennten Bauteile vorgesehen ist. Eine solche Auffangeinrichtung kann beispielsweise aus einer Auffangwanne oder einer Rutsche bestehen, auf die das abgetrennte, fertig gestellte Bauteil fällt. Hierdurch wird vorteilhaft verhindert, dass das Bauteil auf die Pulveroberfläche aufschlägt, die zur Herstellung maßhaltiger Bauteile eine definierte Oberfläche aufweisen muss. Über eine als Rutsche ausgeführte Auffangeinrichtung kann das Bauteil gleichzeitig mit geringem Aufwand aus dem Hohlzylinder heraustransportiert werden.

Weiterhin kann vorteilhaft vorgesehen werden, dass in Drehrichtung des Hohlzylinders gesehen hinter der Trennvorrichtung eine Glättvorrichtung, insbesondere ein Werkzeug zur spanenden Oberflächenbearbeitung, mit der Oberfläche der Bauplattform im Eingriff steht. Mit einer solchen Glättvorrichtung kann die ursprüngliche Oberflächenbeschaffenheit der Innenwand des Hohlzylinders, die als Bauplattform dient, wieder hergestellt werden. Insbesondere werden Bauteilreste entfernt, die nach Trennen des fertigen Bauteils auf der Bauplattform verblieben sind. Hierfür muss die Glättvorrichtung mit der Oberfläche der Bauplattform in Eingriff stehen. Damit ist gemeint, dass ein Abtragen der Bauteilreste und ein Glätten der Bauplattform beispielsweise durch mechanischen Abrieb überhaupt möglich ist. Ein eventueller Abrieb der Oberfläche der Bauplattform kann beispielsweise optisch gemessen werden. Überschreitet er ein für die einzuhaltenden Bauteiltoleranzen kritisches Maß, kann die Bauplattform durch Materialauftrag wieder in Stand gesetzt werden. Hierzu kann insbesondere das im Hohlzylinder stattfindende Verfahren genutzt werden.

Günstig ist es auch, wenn man eine Strahlungsquelle für einen Energiestrahl, insbesondere einen Laser, außerhalb des Innenraums des Hohlzylinders anordnet und im Innenraum des Hohlzylinders eine Umlenkvorrichtung für den Energiestrahl vorsieht. Hierdurch kann der empfindliche Laser in einem sicheren Bereich der Anlage installiert werden und es ist über die Umlenkvorrichtung möglich, den Laserstrahl auf verschiedene Teile der Oberfläche des Pulverbettes zu lenken.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen, und werden nur insoweit mehrfach erläutert wie sich Unterschiede zwischen den einzelnen Figuren ergeben. Es zeigen:
- Figur 1: ein Ausführungsbeispiel der erfindungsgemäßen Anlage im Querschnitt und
- Figur 2: die erfindungsgemäße Anlage gemäß Figur 1 im Schnitt II-II, wobei mit dem dargestellten Ausführungsbeispiel der erfindungsgemäßen Anlage ein Ausführungsbeispiel des erfindungsgemäßen Verfahrens durchgeführt werden kann und im Zusammenhang mit den Figuren näher erläutert wird.

Eine Anlage 11 zum pulverbett-basierten additiven Herstellen von Bauteilen ist als Anlage für selektives Laserschmelzen ausgeführt. In dieser Anlage können Bauteile 12 mittels selektiven Laserschmelzens hergestellt werden. Hierzu ist eine Bauplattform 13 vorgesehen, die durch einen Hohlzylinder 14 gebildet wird. Die Bauplattform 13 ist als Innenwand des Hohlzylinders 14, genauer gesagt durch die Innenwand seiner Mantelfläche, ausgebildet.

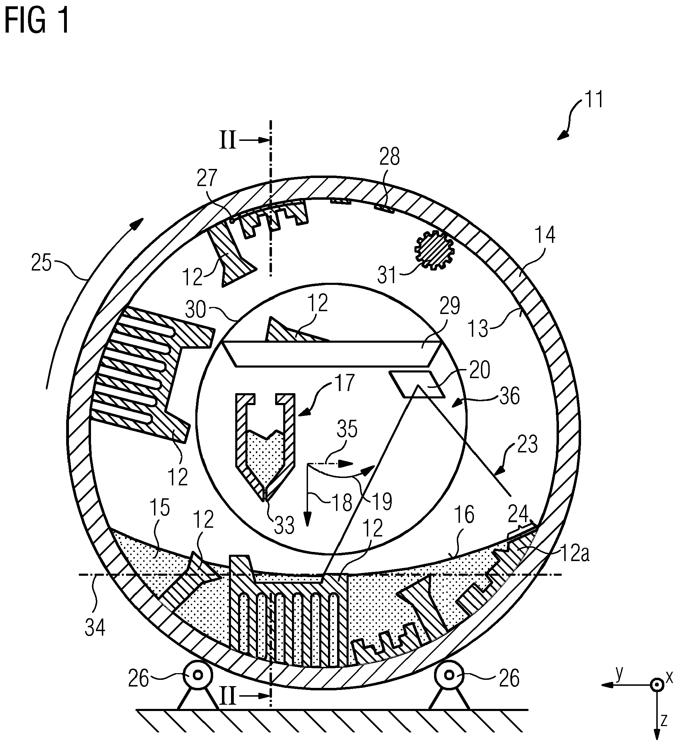

Um die Bauteile 12 herstellen zu können, wird ein Pulverbett 15 benötigt, welches in der Darstellung gemäß Figur 1 eine konkave Oberfläche 16 aufweist, die zur Bauplattform 13 hin gekrümmt ist. Hierzu wird eine Dosiereinrichtung 17 in Z-Richtung 18 auf die Oberfläche 16 des Pulverbettes 15 abgesenkt und dann im Wesentlichen in Y-Richtung 19 entlang einer gekrümmten Bahn bewegt. Hierdurch kann durch Nachrieseln von Pulver aus der Dosiereinrichtung 17 eine nicht näher dargestellte Lage des Pulvers in Form einer dünnen Schicht im Pulverbett 15 hergestellt werden.

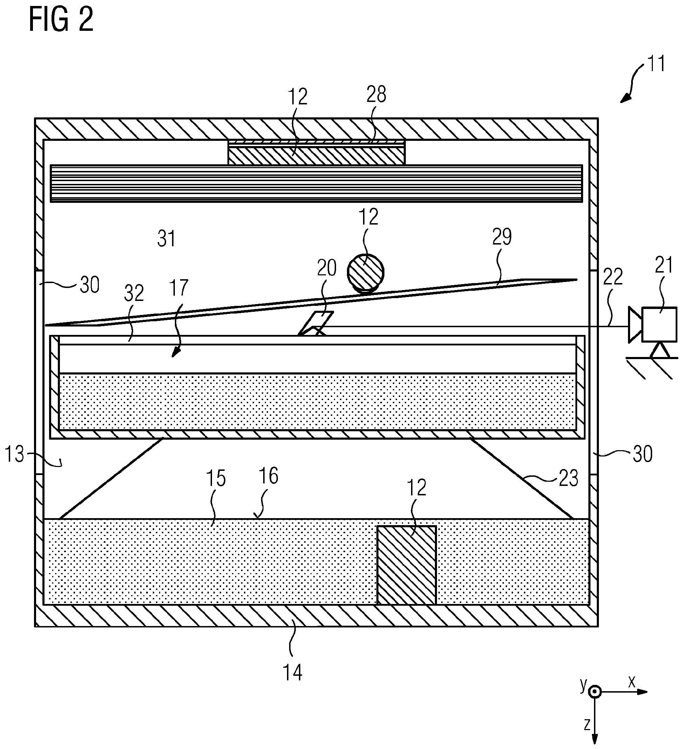

Anschließend wird über einen Spiegel 20 ein nicht näher dargestellter Laserstrahl 21 (siehe Figur 2) in einem Bereich 23 schwenkend umgelenkt, wodurch eine Lage des aktuell herzustellenden Bauteils 12a entsteht. Die oberste Lage des Pulverbettes 15 wird hierbei auf dem erforderlichen Flächenabschnitt 24, d. h. im Bereich der herzustellenden Lage des Bauteils 12a aufgeschmolzen.

Anschließend wird der Hohlzylinder 14 um die X-Achse im Uhrzeigersinn 25 gedreht, damit anschließend in nicht dargestellter Weise mittels der Dosiereinrichtung 17 eine neue Lage des Pulverbettes hergestellt werden kann, die auch das Bauteil 12a wieder bedeckt. Zwecks Bewegung der Trommel ist diese auf Rollen 26 gelagert, die durch einen nicht näher dargestellten Antrieb bewegt werden können.

Durch schrittweise Drehung des Hohlzylinders werden einmal fertige Bauteile 12 langsam aus dem Pulverbett herausgedreht. Sie gelangen nach und nach in den oberen Bereich des Innenraums des Hohlzylinders, wo eine Trennvorrichtung 27 in Form eines Erodierdrahtes vorgesehen ist. Wie zu erkennen ist, kann mit dessen Hilfe das Bauteil von der Bauplattform getrennt werden, wobei Bauteilreste 28 auf der Bauplattform 13 verbleiben. Die abgetrennten Bauteile 12 fallen auf eine Auffangvorrichtung 29 in Form einer Rutsche und können auf dieser durch eine stirnseitige Öffnung 30 aus dem Hohlzylinder 14 herausrutschen. Um den Hohlzylinder 14 herum befindet sich ein nicht dargestelltes Gehäuse, welches den Hohlzylinder gegen die Umgebung hermetisch abschließt und mit einem Schutzgas gefüllt ist. Die Bauteile 12 können durch eine ebenfalls nicht dargestellte Schleuse entnommen werden.

Wenn der Hohlzylinder 14 weitergedreht wird, kommen die Bauteilreste 28 mit einer Glättvorrichtung 31 in Form einer Fräswalze oder Schleifwalze in Eingriff. Diese stellt durch Abtragen der Bauteilreste wieder eine glatte Bauplattform 13 zur Verfügung, die eine definierte Unterlage für die Herstellungen neuer Bauteile zur Verfügung stellt, sobald der geglättete Teil der Innenwand des Hohlzylinders wieder in das Pulverbett 15 eintaucht.

Der Figur 2 lässt sich zusätzlich die Ausdehnung des Hohlzylinders 14 in X-Richtung entnehmen. Zunächst ist ein Längsschnitt durch die Dosiereinrichtung 17 zu erkennen. Es ist gezeigt, dass der Vorratsbehälter der Dosiereinrichtung über eine Öffnung 32 befüllt werden kann. Eine Dosieröffnung 33 gemäß Figur 1 ist schlitzförmig ausgebildet und in Figur 2 wegen der Lage des Schnittes II-II nicht zu erkennen. Die Dosieröffnung erstreckt sich jedoch über die gesamte Länge in X-Richtung der Dosiereinrichtung 17.

Auch ist zu erkennen, dass sich der Bereich 23, in dem der Laser durch Verstellung des Spiegels 20 bewegt werden kann, über fast die gesamte Länge in X-Richtung des Hohlzylinders 14 erstreckt. Außerdem ist zu erkennen, dass ein Bauteil 12, was sich auf der Rutsche 29 befindet, aus der Öffnung 30 ausgetragen werden kann. Auf der gegenüberliegenden Stirnseite ist ebenfalls eine Öffnung 30 angeordnet, durch die hindurch der Laserstrahl 22, erzeugt durch den Laser 21, auf den Spiegel 20 gerichtet werden kann. Hierbei wird der Laserstrahl auch durch eine nicht dargestellte Linsenanordnung zur Strahlformung geleitet.

Auch die Glätteinrichtung erstreckt sich in X-Richtung gesehen über den allergrößten Teil der Länge des Hohlzylinders 14. Zu erkennen ist auch ein Bauteil 12, welches gerade durch die nicht dargestellte Trenneinrichtung 27 (diese befindet sich vor der Zeichenebene, siehe Figur 1) abgetrennt wird. Dabei verbleibt der Bauteilrest 28 auf der Bauplattform 13.

Im Unterschied zu Figur 1 ist in Figur 2 ein Pulverbett 15 dargestellt, welches eine ebene Oberfläche 16 aufweist. Dieses ist in Figur 1 mit einer strichpunktierten Linie 34 angedeutet. Hierzu muss die Dosiereinrichtung in Y-Richtung gemäß dem strichpunktierten Pfeil 35 bewegt werden. Hierbei handelt es sich um eine geradlinige Bewegung. Es wird in Figur 1 auch deutlich, dass das Pulverbett auf diese Weise ein geringeres Volumen erhält, als bei konkaver Ausführung, und daher das Bauteil 12a auf einem tiefer gelegenen Abschnitt der Innenwand des Hohlzylinders 12 hergestellt werden muss.

## Patentansprüche

1. Verfahren zum pulverbett-basierten additiven Herstellen eines Bauteils (12), bei dem auf der Oberfläche einer Bauplattform (13) das Bauteil (12) lagenweise erzeugt wird, indem wiederholt
• auf der Bauplattform (13) eine Lage des Pulverbettes (15) erzeugt wird und
• die herzustellende Lage des Bauteils (12) durch Aufschmelzen des Pulvers erzeugt wird,
wobei die Oberfläche des Pulverbettes (15) zumindest in Teilbereichen nicht parallel zur Oberfläche der Bauplattform (13) verläuft,
**dadurch gekennzeichnet,**
**dass** als Bauplattform (13) die Innenwand eines waagerecht liegenden Hohlzylinders (14) verwendet wird, wobei
• das Pulverbett (15) durch eine teilweise Befüllung des Hohlzylinders (14) mit Pulver erzeugt wird und
• neue Lagen des Pulverbettes (15) jeweils nach einer Drehung des Hohlzylinders (14) um seine Mittelachse erzeugt werden.

2. Verfahren nach Anspruch 1,
**dadurch gekennzeichnet,**
**dass** das Pulverbett (15) und darauf folgende Lagen des Pulverbettes (15) mit einer konkav zur Innenwand des Hohlzylinders (14) gekrümmten Oberfläche hergestellt werden.

3. Verfahren nach einem der vorangehenden Ansprüche,
**dadurch gekennzeichnet,**
**dass** fertig gestellte Bauteile (12) von der Bauplattform (13) getrennt werden, nachdem diese durch Drehung des Hohlzylinders (14) aus dem Pulverbett vollständig aufgetaucht sind.

4. Verfahren nach Anspruch 3,
**dadurch gekennzeichnet,**
**dass** fertig gestellte Bauteile (12) von der Bauplattform (13) getrennt werden, nachdem diese sich durch Drehung des Hohlzylinders (14) in dessen oberen Hälfte befinden.

5. Verfahren nach einem der Ansprüche 3 oder 4,
**dadurch gekennzeichnet,**
**dass** die Bauplattform (13) nach dem Abtrennen der Bauteile von fertigungsbedingten Bauteilresten (28) befreit wird.

6. Verfahren nach einem der vorangehenden Ansprüche,
**dadurch gekennzeichnet,**
**dass** dieses kontinuierlich betrieben wird.

7. Anlage zum pulverbett-basierten additiven Herstellen eines Bauteils (12), aufweisend eine Bauplattform (13) und eine Dosiereinrichtung (17) für Pulver, wobei mit der Dosiereinrichtung (17) ein Pulverbett (15) mit einer Oberfläche erzeugbar ist, die zumindest in Teilbereichen nicht parallel zur Oberfläche der Bauplattform (13) verläuft,
**dadurch gekennzeichnet,**
**dass** die Bauplattform (13) aus der Innenwand eines waagerecht liegenden, um seine Mittelachse drehbar gelagerten Hohlzylinders (14) gebildet ist, wobei der Hohlzylinder (14) zur Aufnahme des Pulverbettes (15) vorgesehen ist, indem die Dosiereinrichtung (17) im Innenraum des Hohlzylinders (14) angeordnet ist.

8. Anlage nach Anspruch 7,
**dadurch gekennzeichnet,**
**dass** die Dosiereinrichtung (17) eine langgestreckte Dosieröffnung (33) aufweist, die parallel zur Mittelachse des Hohlzylinders (14) verläuft.

9. Anlage nach einem der Ansprüche 7 oder 8,
**dadurch gekennzeichnet,**
**dass** außerhalb des für das Pulverbett (15) vorgesehenen Volumens im Innenraum des Hohlzylinders (14) eine Trennvorrichtung (27) für die fertig gestellten Bauteile (12) vorgesehen ist.

10. Anlage nach Anspruch 9,
**dadurch gekennzeichnet,**
**dass** unterhalb der Trennvorrichtung (27) im Innenraum des Hohlzylinders (14) eine Auffangeinrichtung (29) für die abgetrennten Bauteile (12) vorgesehen ist.

11. Anlage nach einem der Ansprüche 9 oder 10,
**dadurch gekennzeichnet,**
**dass** in Drehrichtung des Hohlzylinders (14) gesehen hinter der Trennvorrichtung (27) eine Glättvorrichtung (31), insbesondere ein Werkzeug zur spanenden Oberflächenbearbeitung, mit der Oberfläche der Bauplattform in Eingriff steht.

12. Anlage nach einem der vorangehenden Ansprüche,
**dadurch gekennzeichnet,**
**dass** eine Strahlungsquelle für einen Energiestrahl (22), insbesondere ein Laser (21) vorgesehen ist und im Innenraum des Hohlzylinders (14) eine Umlenkvorrichtung für den Energiestrahl (22), insbesondere ein Spiegel (20) vorgesehen ist.

## Claims

1. Method for powder-bed-based additive production of a component (12), in which the component (12) is made in layers on the surface of a construction platform (13), in that, repeatedly,
• a layer of the powder bed (15) is made on the construction platform (13), and
• the layer of the component (12) to be produced is made by melting-on of the powder,
wherein the surface of the powder bed (15) is not parallel to the surface of the construction platform (13), at least in sub-regions,
**characterized in that**
the interior wall of a horizontally oriented hollow cylinder (14) is used as a construction platform (13), wherein
• the powder bed (15) is made by partially filling the hollow cylinder (14) with powder, and
• new layers of the powder bed (15) are made in each case following a rotation of the hollow cylinder (14) about its central axis.

2. Method according to Claim 1,
**characterized in that**
the powder bed (15) and succeeding layers of the powder bed (15) are produced with a surface that is curved concavely in relation to the interior wall of the hollow cylinder (14).

3. Method according to either one of the preceding claims,
**characterized in that**
completed components (12) are parted off-from the construction platform (13) after having emerged completely from the powder bed as a result of rotation of the hollow cylinder (14).

4. Method according to Claim 3,
**characterized in that**
completed components (12) are parted-off from the construction platform (13) after reaching the upper half of the hollow cylinder (14), as a result of rotation of the latter.

5. Method according to either one of Claims 3 and 4,
**characterized in that**,
after the components have been parted-off, the construction platform (13) cleared of component residues (28) resulting from the production process.

6. Method according to any one of the preceding claims,
**characterized in that**
the method is operated continuously.

7. System for powder-bed-based additive production of a component (12), having a construction platform (13), and a dosing means (17) for powder, wherein the dosing means (17) can be used to make a powder bed (15) having a surface that is not parallel to the surface of the construction platform (13), at least in sub-regions,
**characterized in that**
**in that** the construction platform (13) is constituted by the interior wall of a horizontally oriented hollow cylinder (14) that is mounted so as to be rotatable about its central axis, wherein the hollow cylinder (14) is provided to receive the powder bed (15), **in that** the dosing means (17) is disposed in the interior of the hollow cylinder (14).

8. System according to Claim 7,
**characterized in that**
the dosing means (17) has an oblong dosing aperture (33), which is parallel to the central axis of the hollow cylinder (14).

9. System according to either one of Claims 7 and 8,
**characterized in that**
a parting device (27) for the completed components (12) is provided outside of the volume, in the interior of the hollow cylinder (14), that is provided for the powder bed (15).

10. System according to Claim 9,
**characterized in that**
a collecting means (29) for the parted-off components (12) is provided beneath the parting device (27), in the interior of the hollow cylinder (14).

11. System according to either one of Claims 9 and 10,
**characterized in that**
a smoothing device (31), in particular a tool for surface machining by removal of material, is in engagement with the surface of the construction platform, after the parting device (27) as viewed in the direction of rotation of the hollow cylinder (14).

12. System according to any one of the preceding claims,
**characterized in that**
a radiation source for an energy beam (22), in particular a laser (21), is provided, and a deflection device for the energy beam (22), in particular a mirror (20), is provided in the interior of the hollow cylinder (14).

## Revendications

1. Procédé de fabrication additive sur lit de poudre d'une pièce ( 12 ) dans lequel on produit, couche par couche, la pièce ( 12 ) sur la surface d'une plateforme ( 13 ) de travail en, de manière répétée
• produisant sur la plateforme ( 13 ) de travail une couche du lit ( 15 ) pulvérulent et
• produisant la couche à fabriquer de la pièce ( 12 ) par fusion de la poudre,
dans lequel la surface du lit ( 15 ) de poudre ne s'étend pas, au moins dans des régions partielles, parallèlement à la surface de la plateforme ( 13 ) de travail,
**caractérisé en ce que**
l'on utilise comme plateforme ( 13 ) de travail la paroi intérieure d'un cylindre ( 14 ) creux horizontal, dans lequel
• on produit le lit ( 15 ) de poudre en remplissant partiellement le cylindre ( 14 ) creux de poudre et
• on produit des couches nouvelles du lit ( 15 ) de poudre respectivement après une rotation du cylindre ( 14 ) creux autour de son axe médian.

2. Procédé suivant la revendication 1,
**caractérisé**
**en ce que** l'on fabrique le lit ( 15 ) de poudre et les couches qui s'ensuivent du lit ( 15 ) de poudre avec une surface courbée de manière concave vers la paroi intérieure du cylindre ( 14 ) creux.

3. Procédé suivant l'une des revendications précédentes,
**caractérisé**
**en ce que** l'on sépare des pièces ( 12 ) finies de la plateforme ( 13 ) de travail après que celles-ci ont émergé complètement du lit de poudre par rotation du cylindre ( 14 ) creux.

4. Procédé suivant la revendication 3,
**caractérisé**
**en ce que** l'on sépare des pièces ( 12 ) finies de la plateforme ( 13 ) de travail après que celles-ci se trouvent, par rotation du cylindre ( 14 ) creux, dans sa moitié supérieure.

5. Procédé suivant l'une des revendications 3 ou 4,
**caractérisé**
**en ce que** l'on débarrasse la plateforme ( 13 ) de travail de restes ( 28 ) de pièces dus à la fabrication après la séparation des pièces.

6. Procédé suivant l'une des revendications précédentes,
**caractérisé**
**en ce qu'**on l'effectue en continu.

7. Installation de fabrication additive sur lit de poudre d'une pièce ( 12 ), comportant une plateforme ( 13 ) de travail et un dispositif ( 17 ) d'addition dosée de poudre, dans lequel, par le dispositif ( 17 ) d'addition dosée, il peut être produit un lit ( 15 ) de poudre ayant une surface, qui ne s'étend pas au moins dans des régions partielles parallèlement à la surface de la plateforme ( 13 ) de travail,
**caractérisée**
**en ce que** la plateforme ( 13 ) de travail est formée de la paroi intérieure d'un cylindre ( 14 ) creux horizontal et monté tournant autour de son axe médian, dans lequel le cylindre ( 14 ) creux est prévu pour recevoir le lit ( 15 ) de poudre, par le fait que le dispositif ( 17 ) d'addition dosée est disposé à l'intérieur du cylindre ( 14 ) creux.

8. Installation suivant la revendication 7,
**caractérisée**
**en ce que** le dispositif ( 17 ) d'addition dosée a une ouverture ( 33 ) d'addition dosée, qui s'étend en longueur et qui s'étend parallèlement à l'axe médian du cylindre ( 14 ) creux.

9. Installation suivant l'une des revendications 7 ou 8,
**caractérisée**
**en ce qu'**à l'extérieur du volume prévu pour le lit ( 15 ) de poudre est prévu, à l'intérieur du cylindre ( 14 ) creux, un dispositif ( 27 ) de séparation des pièces ( 12 ) finies.

10. Installation suivant la revendication 9,
**caractérisée**
**en ce qu'**en dessous du dispositif ( 27 ) de séparation est prévu, à l'intérieur du cylindre ( 14 ) creux, un dispositif ( 29 ) pour recueillir les pièces ( 12 ) séparées.

11. Installation suivant l'une des revendications 9 ou 10,
**caractérisée**
**en ce que**, considéré dans le sens de rotation du cylindre ( 14 ) creux, derrière le dispositif ( 27 ) de séparation, un dispositif ( 31 ) de lissage, notamment un outil d'usinage de surface avec enlèvement de copeaux, est en prise avec la surface de la plateforme.

12. Installation suivant l'une des revendications précédentes,
**caractérisée**
**en ce qu'**il est prévu une source de rayonnement pour un faisceau ( 22 ) d'énergie, notamment un laser ( 21 ), et il est prévu, à l'intérieur du cylindre ( 14 ) creux, un dispositif de déviation du faisceau ( 22 ) d'énergie, notamment un miroir ( 20 ).
